# EUROPÄISCHE PATENTSCHRIFT

(11) **EP 3 078 037 B1**
(45) Veröffentlichungstag und Bekanntmachung des Hinweises auf die Patenterteilung: **17.04.2019**
(21) Anmeldenummer: 14808571.5
(22) Anmeldetag: 28.11.2014
(51) Int. Cl.: H01F 7/08, F02M 51/06, H01F 7/128, H01F 7/16

(54) **MAGNETBAUGRUPPE FÜR EIN MAGNETVENTIL**
MAGNET ASSEMBLY FOR A SOLENOID VALVE
ENSEMBLE MAGNÉTIQUE POUR UNE VANNE MAGNÉTIQUE

(30) Priorität: 03.12.2013 DE 102013224719
(43) Veröffentlichungstag der Anmeldung: 12.10.2016
(73) Patentinhaber: Robert Bosch GmbH, 70442 Stuttgart (DE)
(72) Erfinder: GIRLINGER, Gerhard, 4060 Leonding (AT)
(86) Internationale Anmeldenummer: PCT/EP2014/075964
(87) Internationale Veröffentlichungsnummer: WO 2015/082353

(56) Entgegenhaltungen:
- EP-A1- 0 891 231
- EP-A1- 2 366 888
- WO-A1-2013/047418
- WO-A1-2014/067750
- DE-C1- 3 804 011
- FR-A- 1 605 244
- US-A- 3 921 670

## Beschreibung

Die Erfindung betrifft eine Magnetbaugruppe für ein Magnetventil mit den Merkmalen des Oberbegriffs des Anspruchs 1. Ferner wird ein Magnetventil mit einer solchen Magnetbaugruppe vorgeschlagen.

### Stand der Technik

Bei Magnetventilen ist üblicherweise der Magnetkern einer Magnetbaugruppe an der Polfläche zwischen einem Innenpol und einem Außenpol unterbrochen, um den Einbau einer Magnetspule von der Polflächenseite aus zu ermöglichen. Ein solcher Magnetkern für eine Magnetbaugruppe geht beispielsweise aus WO2013/047418 oder aus der Gebrauchsmusterschrift DE 20 2008 008 650 U1 hervor. Der hierin offenbarte Magnetkern ist aus mindestens zwei Kernelementen zusammengesetzt, von denen mindestens ein Kernelement als Sinterelement ausgebildet ist. Dadurch soll ein Magnetkern geschaffen werden, der bei gleichbleibenden Außenabmessungen den Einsatz größerer Spulen ermöglicht und zugleich verminderte Wirbelströme garantiert. Dabei kann ein Kernelement topfförmig ausgebildet sein und einen Außenpolabschnitt, einen Innenpolabschnitt sowie einen den Außenpolabschnitt und den Innenpolabschnitt in radialer Richtung verbindenden Jochabschnitt umfassen, wobei die Abschnitte eine ringförmige Aufnahmeöffnung zur Aufnahme einer Magnetspule begrenzen. Auf der dem Jochabschnitt abgewandten Seite ist die Aufnahmeöffnung von einem Polflächenelement überdeckt, das die Öffnung in radialer Richtung lediglich teilweise überragt und einen Hubanschlag für einen plattenförmigen Magnetanker ausbildet.

Ist der Magnetkern einer solchen Magnetbaugruppe im Betrieb des Magnetventils von einem Betriebsmedium umgeben, das flüssig, gasförmig, aggressiv und/oder leicht entzündlich ist, gilt es den die Magnetspule aufnehmenden Raum gegenüber der das Betriebsmedium aufweisenden Umgebung abzudichten. Denn der Kontakt der Magnetspule mit dem Betriebsmedium kann zu einer Beschädigung der Spule führen. Beispielsweise kann der Eintrag leitfähiger Partikel über das Betriebsmedium zu einem Kurzschluss führen, in dessen Folge es zur Funkenbildung und/oder zum vollständigen Funktionsausfall kommen kann. Im Falle der Funkenbildung besteht ferner die Gefahr einer elektrischen Überbelastung der Spulenwicklung und/oder - in Abhängigkeit von dem jeweils eingesetzten Betriebsmedium - Feuer- und/oder Explosionsgefahr.

Ausgehend von dem vorstehend genannten Stand der Technik liegt der vorliegenden Erfindung daher die Aufgabe zugrunde, eine Magnetbaugruppe für ein Magnetventil vorzuschlagen, das ein verbessertes Abdichtungskonzept besitzt. Die vorgeschlagene Magnetbaugruppe soll zudem einfach aufgebaut und leicht zu montieren sein.

Zur Lösung der Aufgabe wird eine Magnetbaugruppe mit den Merkmalen des Anspruchs 1 vorgeschlagen. Vorteilhafte Weiterbildungen der Erfindung sind in den Unteransprüchen angegeben. Darüber hinaus wird ein Magnetventil mit einer solchen Magnetbaugruppe vorgeschlagen.

### Offenbarung der Erfindung

Die vorgeschlagene Magnetbaugruppe umfasst einen aus mindestens zwei Kernelementen zusammengesetzten Magnetkern und eine Magnetspule, die in eine ringförmige Ausnehmung eines Kernelements eingesetzt ist. Erfindungsgemäß ist die Ausnehmung auf der Seite einer Polfläche, die das Kernelement ausbildet, über einen Stegabschnitt mediendicht verschlossen, wobei der Stegabschnitt durchgehend ausgebildet ist und der Stegabschnitt die Ausnehmung nach unten abdichtet. Der Stegabschnitt verbindet dabei vorzugsweise einen die Ausnehmung radial außen begrenzenden Außenpolabschnitt und einen die Ausnehmung radial innen begrenzenden Innenpolabschnitt des Kernelements. Das Kernelement ist hierzu weiterhin vorzugsweise durchgehend aus einem Massivwerkstoff gefertigt, wobei der Stegabschnitt im Vergleich zu dem Außenpolabschnitt und/oder dem Innenpolabschnitt vergleichsweise dünn ausgebildet sein kann.

Der Magnetkern der erfindungsgemäßen Magnetbaugruppe ist demnach im Bereich seiner Polfläche nicht unterbrochen. Die zur Aufnahme der Magnetspule vorgesehene Ausnehmung ist zu der Seite hin geöffnet, die der Polfläche abgewandt ist. In diesem Bereich ist der Magnetkern vorzugsweise nicht von einem Betriebsmedium umgeben. Auf diese Weise kann über den Magnetkern bzw. ein Kernelement des Magnetkerns eine optimale Abdichtung des Spulenaufnahmeraums erzielt werden, so dass zusätzliche Abdichtungsmaßnahmen ggf. verzichtbar werden. Letzteres hängt insbesondere davon ab, in welchen Bereichen der Magnetkern von dem Betriebsmedium umgeben ist. Vorliegend wird davon ausgegangen, dass ein mit der Magnetspule zusammenwirkender Anker regelmäßig von dem Betriebsmedium umgeben ist, wobei der Anker auf der Polflächenseite des Magnetkerns angeordnet ist. Insofern steht zumindest die Polfläche ebenfalls in Kontakt mit dem Betriebsmedium.

Bevorzugt ist der Stegabschnitt Teil der Polfläche oder schließt an die Polfläche an. Insbesondere können die Polfläche und der Stegabschnitt in einer Radialebene liegen. Alternativ kann jedoch auch die Polflächenseite des Magnetkerns gestuft oder gewölbt ausgebildet sein. Diese Ausgestaltung kann insbesondere dann von Vorteil sein, wenn gemäß einer weiteren bevorzugten Ausführungsform der Erfindung der Stegabschnitt und/oder die Polfläche einen Hubanschlag für einen mit der Magnetspule zusammenwirkenden Anker ausbilden. Über die Stufe und/oder Wölbung ist dann ein Restluftspalt zwischen dem Anker und dem Magnetkern einstellbar.

Weiterhin bevorzugt ist die Ausnehmung auf der der Polfläche abgewandten Seite des Kernelements ganz oder teilweise von einem weiteren Kernelement abgedeckt. Das weitere Kernelement verschließt demnach ganz oder teilweise die die Magnetspule aufnehmende Ausnehmung zur anderen Seite hin. Durch das weitere Kernelement ist die Magnetspule somit vor dem Herausfallen gesichert.

Vorteilhafterweise ist das weitere Kernelement zumindest teilweise in das die Polfläche ausbildende Kernelement eingesetzt. Durch das zumindest teilweise Einsetzen kann ein Formschluss bewirkt werden, der eine Relativbewegung der beiden Kernelemente zueinander in radialer Richtung verhindert.

Des Weiteren wird vorgeschlagen, dass das die Polfläche ausbildende Kernelement einen ringförmigen Kragenabschnitt besitzt, der das weitere Kernelement zumindest abschnittsweise umgibt. Der Kragenabschnitt ist vorzugsweise hohlzylinderförmig ausgebildet und kann eine Innenkontur besitzen, die mit einer Außenkontur des weiteren Kernelements einen Formschluss ausbildend zusammenwirkt. Ferner kann der Kragenabschnitt eine Zentrierungsfunktion besitzen.

Als weiterbildende Maßnahme wird vorgeschlagen, dass im Bereich des Kragenabschnitts wenigstens ein ringförmiges Dichtelement angeordnet ist. Ein ringförmiges Dichtelement ist dabei bevorzugt zwischen den beiden Kernelementen angeordnet. Alternativ oder ergänzend kann ein ringförmiges Dichtelement zwischen dem Kernelement und einem Gehäuseteil angeordnet sein. Über ein im Kragenbereich angeordnetes ringförmiges Dichtelement ist insbesondere ein Radialspalt, beispielsweise ein Radialspalt zwischen dem Magnetkern und einem Gehäuseteil abdichtbar, so dass das Betriebsmedium nicht hinter den Magnetkern zu gelangen vermag. Als ringförmiges Dichtelement kann beispielsweise ein O-Ring eingesetzt werden.

Darüber hinaus wird vorgeschlagen, dass der ringförmige Kragenabschnitt radial außen liegend angeordnet ist und/oder das Kernelement im Bereich des ringförmigen Kragenabschnitts einen maximalen Außendurchmesser besitzt. Der Kragenabschnitt kann auf diese Weise der kraftschlüssigen Verbindung des Magnetkerns mit einem Gehäuseteil dienen, indem beispielsweise das den Kragenabschnitt aufweisende Kernelement in eine Aufnahmebohrung des Gehäuseteils eingepresst wird. Durch den Presssitz wird die abdichtende Wirkung eines etwaigen Dichtelements in diesem Bereich verstärkt oder die Anordnung eines Dichtelements sogar entbehrlich.

Alternativ oder ergänzend kann das weitere Kernelement einen Kragenabschnitt zur Aufnahme wenigstens eines ringförmigen, vorzugsweise radial außen liegenden Dichtelements besitzen. Die Anordnung eines Dichtelements in diesem Bereich ist zwar grundsätzlich immer dann entbehrlich, wenn das weitere Kernelement nicht in Kontakt mit dem Betriebsmedium steht. Durch die Anordnung eines Dichtelements wird jedoch die Sicherheit erhöht. Insbesondere kann durch ein Dichtelement in diesem Bereich verhindert werden, dass ein schädliches Medium von außen in den Spulenaufnahmeraum eindringt. Das Dichtelement ist hierzu bevorzugt außenumfangseitig angeordnet und weiterhin bevorzugt zur Lagefixierung in einer Außenumfangsnut des Kragenabschnitts eingesetzt.

Vorteilhafterweise besitzt das weitere Kernelement eine Ausnehmung zur Aufnahme elektrischer Anschlussleitungen. Über die Anschlussleitungen kann der erforderliche elektrische Anschluss der Magnetspule bewirkt werden. Die Aufnahme der Anschlussleitungen im Kernelement, das vorzugsweise nicht in Kontakt mit dem Betriebsmittel steht, stellt sicher, dass auch die Anschlussleitungen nicht in Kontakt mit dem Betriebsmedium gelangen.

Ferner wird ein Magnetventil mit einer erfindungsgemäßen Magnetbaugruppe vorgeschlagen, wobei das Magnetventil einen als Flachanker ausgebildeten und mit der Magnetspule zusammenwirkenden Anker besitzt. Das die Polfläche ausbildende Kernelement dient vorzugsweise zugleich als Hubanschlag für den Anker, wobei die Polfläche eben, gestuft oder zumindest teilweise gewölbt ausgebildet sein kann, um ggf. einen Restluftspalt zwischen dem Anker und dem Magnetkern zu definieren. Der Anker und das die Polfläche ausbildende Kernelement des mehrteiligen Magnetkerns sind weiterhin vorzugsweise von einem Betriebsmedium umgeben, das flüssig gasförmig, aggressiv und/oder leicht entzündlich ist, wobei die Geschlossenheit des Kernelements im Bereich der Polfläche den dahinter liegenden Spulenaufnahmeraum gegenüber dem Betriebsmedium abdichtet. Vorzugsweise ist das Kernelement zudem über einen Kragenabschnitt in ein Gehäuseteil des Magnetventils eingepresst, so dass über den Presssitz und/oder über ein in diesem Bereich eingesetztes ringförmiges Dichtelement ferner sichergestellt ist, dass das Betriebsmedium nicht hinter das Kernelement in Richtung des weiteren Kernelements strömt.

Weitere Vorteile der Erfindung ergeben sich aus der nachfolgenden Beschreibung bevorzugter Ausführungsbeispiele, die in den beigefügten Figuren dargestellt sind. Diese zeigen:
- Figur 1: einen schematischen Längsschnitt durch eine in ein Magnetventil eingebaute erfindungsgemäße Magnetbaugruppe gemäß einer ersten bevorzugten Ausführungsform,
- Figur 2: einen vergrößerten Ausschnitt der Figur 1 und
- Figur 3: einen schematischen Längsschnitt durch eine in ein Magnetventil eingebaute erfindungsgemäße Magnetbaugruppe gemäß einer zweiten bevorzugten Ausführungsform.

### Ausführliche Beschreibung der Zeichnungen

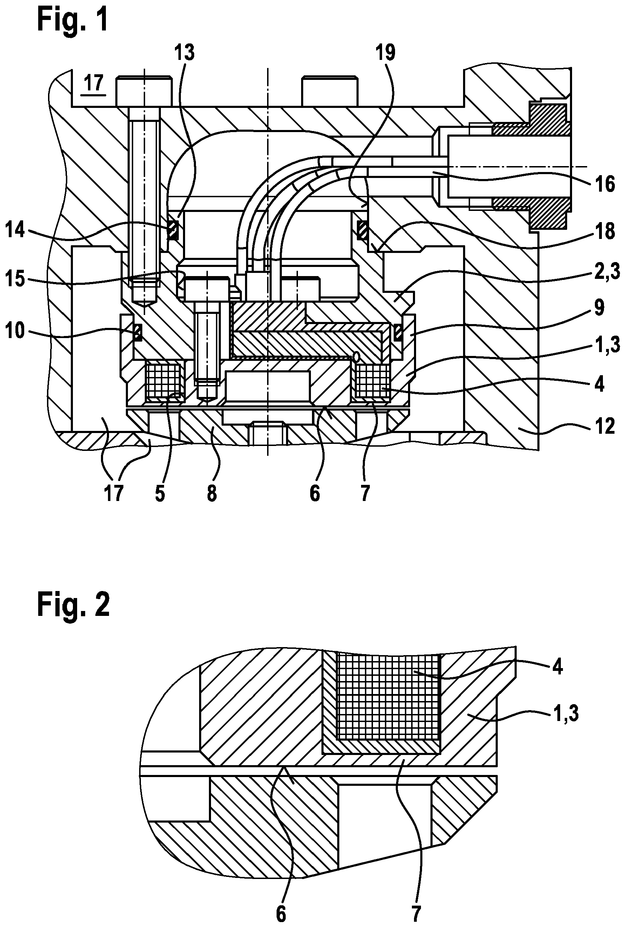

Die in der Figur 1 dargestellte, in ein Magnetventil eingesetzte Magnetbaugruppe umfasst einen mehrteiligen Magnetkern 3 mit einem ersten Kernelement 1 und einem zweiten Kernelement 2. In eine ringförmige Ausnehmung 5 des ersten Kernelements 1 ist eine Magnetspule 4 eingesetzt, welche die Ausnehmung 5 vollständig ausfüllt. Das zweite Kernelement2 ist derart in einen ringförmigen Kragenabschnitt 9 des ersten Kernelements 1 eingesetzt, dass die Ausnehmung 5 vollständig von dem zweiten Kernelement 2 abgedeckt wird. In Richtung eines mit der Magnetbaugruppe zusammenwirkenden Ankers 8 ist die Ausnehmung 5 über einen dünnen Stegabschnitt 7 des ersten Kernelements 1 verschlossen. Zumindest die an den Stegabschnitt 7 angrenzenden Oberflächen bilden Polflächen 6 aus, die den Aufbau eines Magnetfeldes um die Magnetspule 4 herum sicherstellen, wenn die Magnetspule 4 bestromt wird. Der hierzu erforderliche elektrische Anschluss der Magnetspule 4 wird über elektrische Anschlussleitungen 16 realisiert, die durch eine Ausnehmung 15 des zweiten Kernelements 2 geführt sind.

Im Betrieb des Magnetventils sind der Anker 8 und das erste Kernelement 1 von einem Betriebsmedium umgeben, das einen Raum 17 zur Aufnahme des Ankers 8 und des Magnetkerns 3 füllt. Sowohl das erste Kernelement 1 als auch das zweite Kernelement 2 des Magnetkerns 3 sind vorliegend von dem Betriebsmedium umgeben. Um sicherzustellen, dass kein Betriebsmedium in die Ausnehmung 5 des ersten Kernelements 1 gelangt, in welcher die Magnetspule 4 aufgenommen ist, ist im Kontaktbereich zwischen dem ersten und dem zweiten Kernelement 1,2 ein ringförmiges Dichtelement 10 eingesetzt. Zur Lagefixierung ist das Dichtelement 10 in einer außenumfangseitigen Ringnut des zweiten Kernelements 2 eingesetzt. Ein weiteres ringförmiges Dichtelement 14 ist im Bereich eines Kragenabschnitts 13 des zweiten Kernelements 2 vorgesehen, um zu verhindern, dass das Betriebsmedium über den Kontaktbereich des zweiten Kernelements 2 des Magnetkerns 3 mit einem Gehäuseteil 12 des Magnetventils nach außen gelangt. Der Kragenabschnitt 13 des zweiten Kernelements 2 ist hierzu in einer Aufnahmebohrung 19 des Gehäuseteils 12 eingesetzt bzw. eingepresst. Der Kragenabschnitt 13 ist leicht nach radial innen versetzt, so dass eine Stufe 18 ausgebildet wird, über welche das zweite Kernelement 2 am Gehäuseteil 12 abgestützt ist.

Die Dichtigkeit der Ausnehmung 5, in welcher die Magnetspule 4 aufgenommen ist, wird ferner dadurch sichergestellt, dass das erste Kernelement 1 auf der Seite der Polfläche 6 vollständig geschlossen und damit mediendicht ausgeführt ist. Wie der Figur 2 zu entnehmen ist, schließt der durchgehende Stegabschnitt 7 die Ausnehmung 5 nach unten ab. Das Kernelement 1 ist hierzu durchgehend aus einem Massivwerkstoff gefertigt.

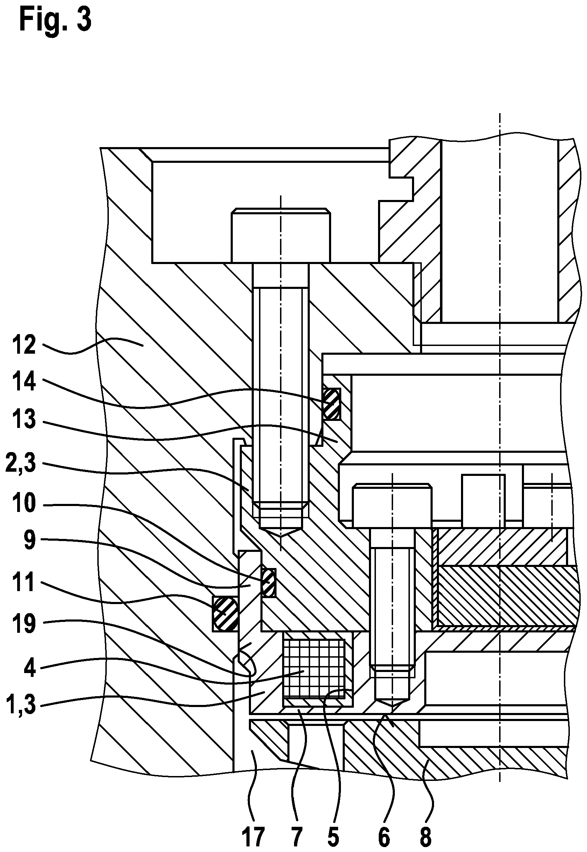

Die Dichtigkeit der Anordnung kann ferner dadurch erhöht werden, wenn Sorge getragen wird, dass das zweite Kernelement 2 nicht mehr in Kontakt mit dem Betriebsmedium gelangt. Um dies zu erreichen, kann - wie in dem Ausführungsbeispiel der Figur 3 dargestellt - der Kragenabschnitt 9 des ersten Kernelements 1 des Magnetkerns 3 dazu genutzt werden, den Magnetkern 3 in die Aufnahmebohrung 19 des Gehäuseteils 12 unter einer radialen Vorspannung einzusetzen. Die radiale Vorspannung kann beispielsweise über ein zwischenliegendes ringförmiges Dichtelement 11 und/oder ein radiales Übermaß des Kragenabschnitts 9 gegenüber der Aufnahmebohrung 19 des Gehäuseteils 12 bewirkt werden. Im Ausführungsbeispiel der Figur 3 wird beides realisiert, so dass die dargestellten ringförmigen Dichtelemente 10, 14 verzichtbar sind.

## Patentansprüche

1. Magnetbaugruppe für ein Magnetventil, umfassend einen aus mindestens einem ersten und einem zweiten Kernelement (1, 2) zusammengesetzten Magnetkern (3) und eine Magnetspule (4), die in eine ringförmige Ausnehmung (5) des ersten Kernelements (1) eingesetzt ist,
**dadurch gekennzeichnet, dass** die Ausnehmung (5) auf der Seite einer Polfläche (6), die das erste Kernelement (1) ausbildet, über einen Stegabschnitt (7) des ersten Kernelements (1) mediendicht verschlossen ist, wobei der Stegabschnitt (7) durchgehend ausgebildet ist und der Stegabschnitt (7) die Ausnehmung (5) nach unten abschließt, so dass der Magnetkern im Bereich der Polfläche nicht unterbrochen ist.

2. Magnetbaugruppe nach Anspruch 1,
**dadurch gekennzeichnet, dass** der Stegabschnitt (7) Teil der Polfläche (6) ist oder an die Polfläche (6) anschließt.

3. Magnetbaugruppe nach Anspruch 1 oder 2,
**dadurch gekennzeichnet, dass** der Stegabschnitt (7) und/oder die Polfläche (6) einen Hubanschlag für einen mit der Magnetspule (4) zusammenwirkenden Anker (8) ausbilden.

4. Magnetbaugruppe nach einem der vorhergehenden Ansprüche,
**dadurch gekennzeichnet, dass** die Ausnehmung (5) auf der der Polfläche (6) abgewandten Seite des ersten Kernelements (1) ganz oder teilweise von dem zweiten Kernelement (2) abgedeckt ist.

5. Magnetbaugruppe nach einem der vorhergehenden Ansprüche, **dadur**
**ch gekennzeichnet,** dass das zweite Kernelement (2) zumindest teilweise in das die Polfläche (6) ausbildende erste Kernelement (1) eingesetzt ist.

6. Magnetbaugruppe nach einem der vorhergehenden Ansprüche,
**dadurch gekennzeichnet, dass** das die Polfläche (6) ausbildende erste Kernelement (1) einen ringförmigen Kragenabschnitt (9) besitzt, der das zweite Kernelement (2) zumindest abschnittsweise umgibt.

7. Magnetbaugruppe nach Anspruch 6,
**dadurch gekennzeichnet, dass** im Bereich des Kragenabschnitts (9) wenigstens ein ringförmiges Dichtelement (10, 11) angeordnet ist, wobei vorzugsweise ein ringförmiges Dichtelement (10) zwischen den beiden Kernelementen (1, 2) und/oder ein ringförmiges Dichtelement (11) zwischen dem ersten Kernelement (1) und einem Gehäuseteil (12) angeordnet ist.

8. Magnetbaugruppe nach Anspruch 6 oder 7,
**dadurch gekennzeichnet, dass** der ringförmige Kragenabschnitt (9) radial außen liegend angeordnet ist und/oder das erste Kernelement (1) im Bereich des ringförmigen Kragenabschnitts (9) einen maximalen Außendurchmesser besitzt.

9. Magnetbaugruppe nach einem der vorhergehenden Ansprüche,
**dadurch gekennzeichnet, dass** das zweite Kernelement (2) einen Kragenabschnitt (13) zur Aufnahme wenigstens eines ringförmigen, vorzugsweise radial außen liegenden Dichtelements (14) besitzt.

10. Magnetbaugruppe nach einem der vorhergehenden Ansprüche,
**dadurch gekennzeichnet, dass** das zweite Kernelement (2) eine Ausnehmung (15) zur Aufnahme elektrischer Anschlussleitungen (16) besitzt.

11. Magnetventil mit einer Magnetbaugruppe nach einem der vorhergehenden Ansprüche, wobei das Magnetventil einen als Flachanker ausgebildeten und mit der Magnetspule (4) zusammenwirkenden Anker (8) besitzt.

## Claims

1. Magnet assembly for a solenoid valve, comprising a magnet core (3), which is composed of at least one first and one second core element (1, 2), and a magnet coil (4), which is inserted into an annular recess (5) in the first core element (1),
**characterized in that** the recess (5) is closed in a media-tight manner by means of a web section (7) of the first core element (1) on the side of a pole face (6) which forms the first core element (1), wherein the web section (7) is formed in a continuous manner and the web section (7) closes off the recess (5) at the bottom so that the magnet core is not interrupted in the region of the pole face.

2. Magnet assembly according to Claim 1, **characterized in that** the web section (7) is part of the pole face (6) or adjoins the pole face (6).

3. Magnet assembly according to Claim 1 or 2,
**characterized in that** the web section (7) and/or the pole face (6) form/forms a stroke stop for an armature (8) which interacts with the magnet coil (4).

4. Magnet assembly according to one of the preceding claims,
**characterized in that** the recess (5) is entirely or partially covered by the second core element (2) on that side of the first core element (1) which is averted from the pole face (6).

5. Magnet assembly according to one of the preceding claims,
**characterized in that** the second core element (2) is at least partially inserted into the first core element (1) which forms the pole face (6).

6. Magnet assembly according to one of the preceding claims,
**characterized in that** the first core element (1) which forms the pole face (6) has an annular collar section (9) which surrounds the second core element (2) at least in sections.

7. Magnet assembly according to Claim 6,
**characterized in that** at least one annular sealing element (10, 11) is arranged in the region of the collar section (9), wherein an annular sealing element (10) is preferably arranged between the two core elements (1, 2) and/or an annular sealing element (11) is preferably arranged between the first core element (1) and a housing part (12).

8. Magnet assembly according to Claim 6 or 7,
**characterized in that** the annular collar section (9) is arranged such that it is situated radially on the outside and/or the first core element (1) has a maximum outside diameter in the region of the annular collar section (9).

9. Magnet assembly according to one of the preceding claims,
**characterized in that** the second core element (2) has a collar section (13) for receiving at least one annular sealing element (14) which is preferably situated radially on the outside.

10. Magnet assembly according to one of the preceding claims,
**characterized in that** the second core element (2) has a recess (15) for receiving electrical connection lines (16) .

11. Solenoid valve comprising a magnet assembly according to one of the preceding claims, wherein the solenoid valve has an armature (8) which is in the form of a flat armature and interacts with the magnet coil (4) .

## Revendications

1. Ensemble magnétique pour une vanne magnétique, comprenant un noyau magnétique (3) composé d'au moins un premier et un second éléments de noyau (1, 2) et une bobine magnétique (4), qui est insérée dans un évidement annulaire (5) du premier élément de noyau (1), **caractérisé en ce que** l'évidement (5) est fermé de façon étanche au fluide par une partie de nervure (7) du premier élément de noyau (1) sur le côté d'une face polaire (6), que forme le premier élément de noyau (1), dans lequel la partie de nervure (7) est continue et la partie de nervure (7) ferme l'évidement (5) vers le bas, de telle manière que le noyau magnétique ne soit pas interrompu dans la région de la face polaire.

2. Ensemble magnétique selon la revendication 1, **caractérisé en ce que** la partie de nervure (7) fait partie de la face polaire (6) ou se raccorde à la face polaire (6) .

3. Ensemble magnétique selon la revendication 1 ou 2, **caractérisé en ce que** la partie de nervure (7) et/ou la face polaire (6) forment une butée de levée pour un induit (8) coopérant avec la bobine magnétique (4).

4. Ensemble magnétique selon l'une quelconque des revendications précédentes, **caractérisé en ce que** l'évidement (5) est recouvert entièrement ou partiellement par le second élément de noyau (2) sur le côté du premier élément de noyau (1) détourné de la face polaire (6).

5. Ensemble magnétique selon l'une quelconque des revendications précédentes, **caractérisé en ce que** le second élément de noyau (2) est introduit au moins en partie dans le premier élément de noyau (1) formant la face polaire (6).

6. Ensemble magnétique selon l'une quelconque des revendications précédentes, **caractérisé en ce que** le premier élément de noyau (1) formant la face polaire (6) comprend une partie de rebord annulaire (9), qui encercle au moins en partie le second élément de noyau (2).

7. Ensemble magnétique selon la revendication 6, **caractérisé en ce qu'**au moins un élément d'étanchéité annulaire (10, 11) est disposé dans la région de la partie de rebord (9), dans lequel un élément d'étanchéité annulaire (10) est de préférence disposé entre les deux éléments de noyau (1, 2) et/ou un élément d'étanchéité annulaire (11) est disposé entre le premier élément de noyau (1) et une partie de boîtier (12).

8. Ensemble magnétique selon la revendication 6 ou 7, **caractérisé en ce que** la partie de rebord annulaire (9) est située radialement à l'extérieur et/ou le premier élément de noyau (1) présente un diamètre extérieur maximal dans la région de la partie de rebord annulaire (9) .

9. Ensemble magnétique selon l'une quelconque des revendications précédentes, **caractérisé en ce que** le second élément de noyau (2) comprend une partie de rebord (13) destinée à recevoir au moins un élément d'étanchéité annulaire (14), de préférence situé radialement à l'extérieur.

10. Ensemble magnétique selon l'une quelconque des revendications précédentes, **caractérisé en ce que** le second élément de noyau (2) comporte un évidement (15) destiné à recevoir des câbles de raccordement électriques (16) .

11. Vanne magnétique comportant un ensemble magnétique selon l'une quelconque des revendications précédentes, dans laquelle la vanne magnétique comprend un induit (8) réalisé sous forme d'induit plat et coopérant avec la bobine magnétique (4).
